# EUROPEAN PATENT APPLICATION

(11) **EP 2 918 737 A1**
(43) Date of publication of application: **16.09.2015**
(21) Application number: 15158748.2
(22) Date of filing: 12.03.2015
(51) Int. Cl.: E03B 7/07, F24D 3/10

(54) **Expansion vessel, particularly for plumbing systems with water pumping unit**

(30) Priority: 13.03.2014 IT PD20140058
(71) Applicant: Varem S.p.A., 35024 Bovolenta (PD) (IT)
(72) Inventor: Mazzucato, Filippo, 35041 Battaglia Terme, PD (IT)
(74) Representative: Modiano, Micaela Nadia

(57) **Abstract**

An expansion vessel (10), particularly for plumbing systems with water pumping unit, of the type comprising:
- a hollow body (11), constituted by two half-shells (12, 13) which are closed hermetically on each other,
- a membrane (14), which is located inside the hollow body (11) and is adapted to define two chambers with variable volume (15, 16),
- a first chamber (15) between the hollow body (11) and the membrane (14), for a gas,
- a second chamber (16), inside the membrane (14),

the expansion vessel (10) comprising a tubular element (17) that passes within the membrane (14) and is fixed between an inlet (18) and an outlet (19) which are defined on the hollow body (11), the tubular element (17) having radial holes (20) for the passage of water between the second chamber (16) and the inside of the tubular element (17).

## Description

The present invention relates to an expansion vessel, particularly for plumbing systems with water pumping unit.

Nowadays so-called "expansion vessels" are well known and applied in household plumbing systems, in irrigation systems, in water distribution (potable and non-potable) in general, and also in plumbing systems provided with means of pumping and raising water.

Such expansion vessels, when they are intended for use in a potable water system, are better known as "surge tanks" in the jargon; hereinbelow the term "expansion vessel" is used to also include the specific use for potable water.

Expansion vessels are devices that are adapted to absorb the variation in volume of water, or of other liquids, thus enabling the correct operation of a plumbing system in all its operational steps, thus preventing hazardous water hammers and sudden changes in pressure, which otherwise would have to be absorbed by the piping and by the rest of the system, with high risk of damage.

The expansion vessels, or surge tanks, known today are generally constituted by:
- a hollow body, constituted by two half-shells which are closed hermetically on each other,
- a membrane, which is located inside the hollow body and is adapted to define two chambers with variable volume,
- a first chamber between the hollow body and the membrane, for a gas, for example nitrogen,
- a second chamber, inside the membrane, for water from and for a plumbing system with which the expansion vessel is associated.

The membrane usually defines an elastically-extendable bag, whose opening is fixed at the inlet of the hollow body.

The gas is loaded in the first chamber to a back pressure that is such as to allow the filling of the second chamber with water coming from the system under a pressure overload, higher than the preset back pressure, and such as to cause the emptying of the second chamber when the pressure overload in the system disappears.

Expansion vessels and surge tanks usually take up a lot of space and to be installed they therefore require a lot of room.

Nowadays in plumbing systems with means of pumping and raising water, the adoption is spreading of pump regulator devices instead of expansion vessels, in order to keep down costs and save space.

A pump regulator device, which takes up less space than an expansion vessel, is designed to detect the pressure in the system and the flow that passes through it, and is programmed to protect the system pump from hazardous operating conditions; the operating logic of the pump regulator device is that when a faucet is opened, the pump is started, and the latter is kept running, with constant flow, even at low flow rates.

When the water flow required becomes practically nil, the pump regulator stops the pump.

Such pump regulators, although increasingly widespread owing to their space occupation and low cost, suffer two major drawbacks.

The most prominent drawback is constituted by the fact that in the absence of an expansion vessel, and hence in the absence of a buildup of water, the pump regulator has to start and stop the pump for every small withdrawal of water, where small withdrawals of just a few seconds are the most common, especially in a household environment.

The high number of starts and stops of the pump for small withdrawals, losses and other similar events that translate to a very low demand for water from the system, determine a higher energy consumption than adopting an expansion vessel; furthermore, the more frequent the starts and stops of a pump, the more probable it is that the start and stop system will wear out and fail, also causing a rapid wear of the electric pump owing to the high number of actuations that it is forced to make.

Furthermore, plumbing systems with pumping means actuated by a pump regulator can suffer from the phenomenon of a water hammer since they lack a sufficient system for accumulating water which cancels out the effects of this phenomenon.

Although indispensable, expansion vessels also have limitations.

A first limitation is the previously-mentioned space occupation, determined by the mandatory position of the expansion vessel beside a pipe of the plumbing system with which it is associated, and generally in a position for use that has the inlet of the vessel directed downwardly, so as to also use the force of gravity in order to facilitate the outflow of water from the membrane.

A second limitation of expansion vessels, and in particular of surge tanks, is constituted by the fact that when the membrane starts to lose elasticity, or the gas in the first chamber starts to lose pressure, water can stagnate inside the membrane and thus inside the expansion vessel, since the expansion vessel is no longer capable of fully emptying itself of the water inside it.

Standing water is utterly unwanted since it can determine the proliferation of harmful bacteria such as for example legionella, which is unacceptable in a plumbing system especially in a household environment.

The aim of the present invention is to provide an expansion vessel, particularly for plumbing systems with water pumping unit, which is capable of overcoming the above mentioned drawbacks of the known art.

Within this aim, an object of the invention is to provide an expansion vessel that for the same capacity requires less space for installation than conventional expansion vessels.

Another object of the invention is to provide an expansion vessel, particularly acting as a surge tank, in which water does not stagnate.

Another object of the invention is to provide an expansion vessel that can be easily fitted to existing conventional plumbing systems, and adapted for every type of pump regulator installed or to be installed.

Another object of the invention is to provide an expansion vessel that can reduce the starts and stops of a pump of the plumbing system on which it is installed, if driven by a pump regulator.

Another object of the invention is to provide an expansion vessel in which the membrane has a longer lifetime than in an equivalent, conventional expansion vessel.

This aim and these and other objects which will become better evident hereinafter are achieved by an expansion vessel, particularly for plumbing systems with water pumping unit, of the type comprising:
- a hollow body, constituted by two half-shells which are closed hermetically on each other,
- a membrane, which is located inside said hollow body and is adapted to define two chambers with variable volume,
- a first chamber between the hollow body and the membrane, for a gas,
- a second chamber, inside said membrane,
said expansion vessel being characterized in that it comprises a tubular element that passes within said membrane and is fixed between an inlet and an outlet which are defined on said hollow body, said tubular element having radial holes for the passage of water between said second chamber and the inside of said tubular element.

Further characteristics and advantages of the invention will become better apparent from the detailed description that follows of a preferred, but not exclusive, embodiment of the expansion vessel according to the invention, which is illustrated for the purposes of non-limiting example in the accompanying drawings wherein:

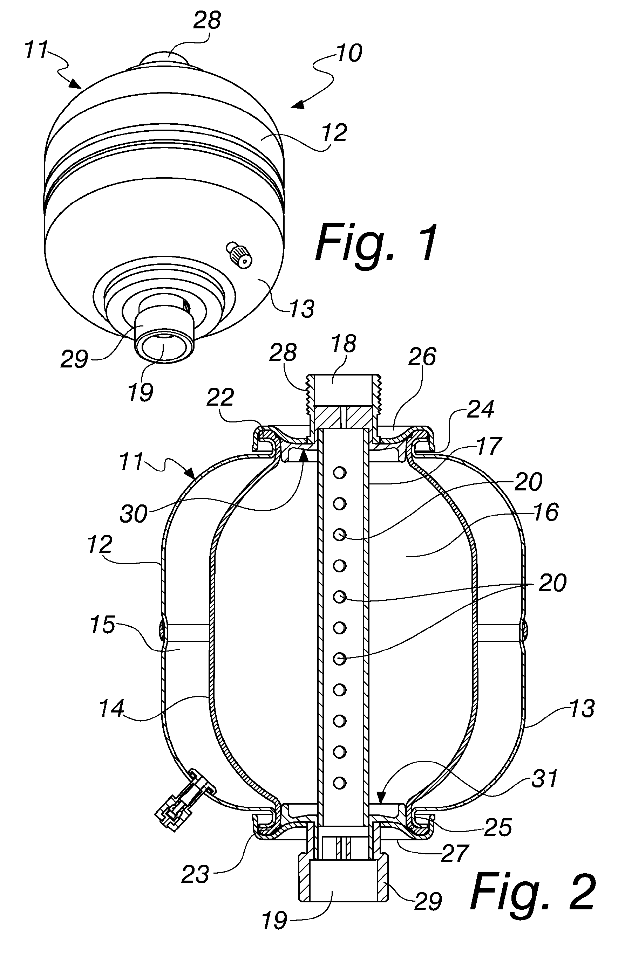

- Figure 1 is a perspective view of an expansion vessel according to the invention;
- Figure 2 is a sectional side view of the expansion vessel in Figure 1;
- Figure 3 is a detail of Figure 2;
- Figure 4 shows an application of a series of expansion vessels according to the invention.

With reference to the figures, an expansion vessel, particularly for plumbing systems with water pumping unit, according to the invention, is generally designated with the reference numeral 10.

As said above, hereinafter the term "expansion vessel" is used to include both the use of the invention for non-potable water, and also the specific use for potable water, the latter use of an expansion vessel being known in the jargon as a "surge tank".

The expansion vessel 10 comprises:
- a hollow body 11, constituted by two half-shells 12 and 13 which are closed hermetically on each other,
- a membrane 14, which is located inside the hollow body 11 and is adapted to define two chambers with variable volume,
- a first chamber 15 between the hollow body 11 and the membrane 14, for a gas,
- a second chamber 16, inside the membrane 14, for water from and for a plumbing system with which the expansion vessel is associated.

The expansion vessel 10 has the peculiarity of comprising a tubular element 17 that passes within the membrane 14, and is fixed between an inlet 18 and an outlet 19 which are defined on the hollow body 11.

The tubular element 17 has radial holes 20 for the passage of water between the inside of the membrane 14, i.e. the second chamber 16, and the inside of the tubular element.

In the embodiment of the invention described herein, by way of non-limiting example of the invention, the tubular element 17 is constituted by a tube made of plastic material.

The radial holes 20 are arranged, for example, on a plurality of rows that are extended in the direction of the of the axis of the tubular element 17, so as to affect the tubular element 17 substantially along its entire length.

The elastically deformable membrane 14 is made of synthetic rubber, for example of EPDM, and is substantially tubular, with the end flaps 22 and 23 folded outwardly.

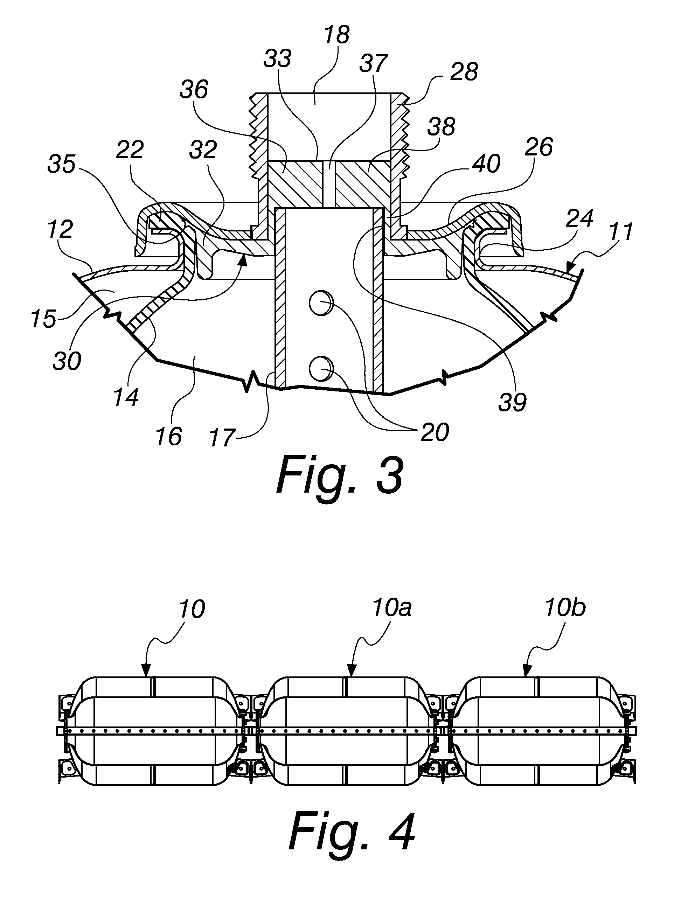

Each one of the end flaps 22 and 23 is pinched between a collar 24 or 25, shown and clearly visible in Figure 3, which extends from a corresponding half-shell 12 or 13, and a cover 26 or 27, of which the perimetric rim is folded so as to lock the corresponding end flap 22 or 23 against the collar 24 or 25.

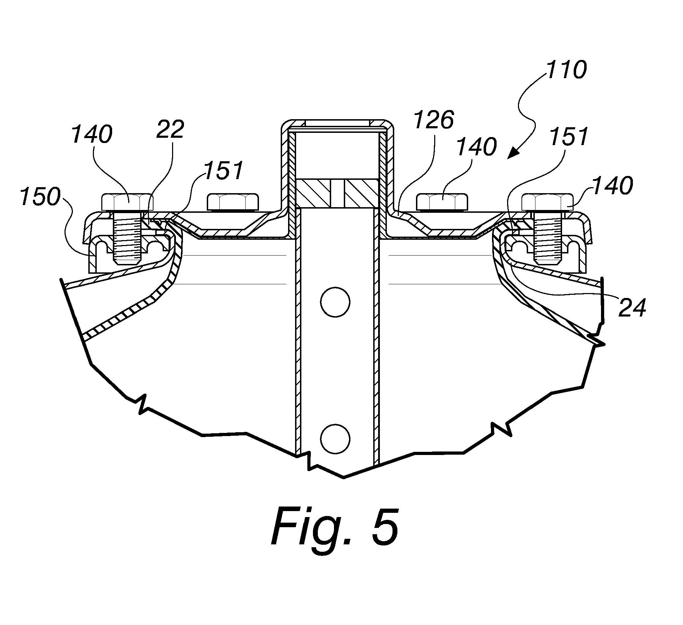

In a variation of embodiment of the expansion vessel, shown in Figure 5 and designated therein with the reference numeral 110, the cover, for example 126, has its perimetric rim fixed by way of screws 140 to an annular complementary flange 150 that is arranged so as to surround the collar 24 and is engaged with it by way of an extraction-preventing fold 151 of the collar 24; the end flap 22 or 23 of the membrane 14 is locked between the corresponding extraction-preventing fold 151 of the collar 24 and the cover 126.

The cover 26 and 27 has a water passage sleeve 28 and 29.

The water passage sleeves 28 and 29 define the inlet 18 and outlet 19 openings for the water.

The tubular element 17 is connected to the water passage sleeves 28 and 29.

The sleeves 28 and 29 respectively have an outer thread and an inner thread of standardized type, so as to be able to be immediately connected to a duct of a plumbing system.

Interposed between each cover 26 and 27 and the corresponding end of the tubular element 17 is a respective centering element 30 and 31 respectively.

Each one of such centering elements, for example the centering element 30 which is clearly visible in Figure 3, has an outer annular portion 32 and a central centering portion 33.

The outer annular portion 32 extends with a perimetric flap 35 that is adapted to be locked between the corresponding end flap 22 of the membrane 14 and the respective cover 26.

The central centering portion 33 is constituted by a collar 40 that is contoured to enter the water passage sleeve 28, and is provided with a compartment 39 in which the end of the tubular element 17 is inserted.

The central part of the collar 40 has a series of radial fins 36, 37, 38 that are adapted to straighten the flow of water entering and exiting the expansion vessel 10.

Use of the expansion vessel according to the invention is intuitive and immediate, it being necessary and sufficient to install the expansion vessel 10 for example on the main conduit of the plumbing system, immediately after the output from the pump for raising water of the system.

During the supply of water to a user, the water passes through the expansion vessel 10 by way of the tubular element 17, and when the user stops demand, the pump can continue pumping water for a few seconds so that some liters of water accumulate in the expansion vessel 10.

The water enters the tubular element 17 and, not being able to pass through it, flows through the radial holes 20 into the membrane 14, which expands to contain a preset quantity of such water.

Upon the opening of a faucet, or in any case at the command of a user, the expansion vessel 10 returns the water contained in the membrane 14 to the system, through the same radial holes 20 of the tubular element 17, and obviously through the same tubular element 17.

An advantage of the expansion vessel 10 according to the invention is therefore the ability to install it in-line both on new systems and on existing systems, without modifying the system proper, both horizontally and vertically.

A major advantage of the expansion vessel 10 according to the invention consists of benefits for the lifetime of the pump, and also for energy savings, which are due to the lower number of starts of the pump for small withdrawals and/or losses.

Another major advantage is constituted by the fact that the expansion vessel 10, as such, protects the plumbing system from the phenomena of water hammers.

Another major advantage, particularly when used as a surge tank, of the expansion vessel 10 according to the invention is constituted by the fact that it presents no risk of water stagnating inside the membrane 14, even in the event of an incorrect rating of the preloading pressure of the gas in the first chamber 15, thanks to the perforated tubular element 17 which allows the continuous passage of water through the expansion vessel, and as a consequence water that accumulates in the membrane 14 always undergoes a complete exchange, exiting through the holes 20 of the tubular element 17, which are distributed over the entire length of the tubular element 17.

Furthermore, the expansion vessel 10 according to the invention has a membrane 14 that, thanks to its peculiar tubular shape and to its peculiar position, locked by its two opposing ends to the hollow body 11, is less subject to elastic deformation, since it dilates radially but does not deform in length, unlike the membranes of conventional expansion vessels, and as a consequence it can ensure a longer lifetime than membranes of traditional vessels.

Another advantage of the expansion vessel 10 according to the invention consists in that, thanks to the membrane 14 which is locked by its two opposing ends and to the perforated tubular element 17 that passes through the vessel from side to side, there are no restrictions on its positioning and it is possible to install it vertically or horizontally.

Another important advantage of the expansion vessel 10 according to the invention lies in the smaller overall space occupation that it entails once installation is complete, in fact the expansion vessel 10, which is arranged coaxial to the duct of the system with which it is associated, and not arranged beside it, means it can be mounted even in situations in which there are only a few dozen centimeters of space around a duct.

Figure 4 shows a specific use of the expansion vessel 10 according to the invention.

The figure shows a plurality of expansion vessels according to the invention, designated with 10, 10a and 10b respectively, which are mounted in series on a same line of a plumbing system.

Such mounting in series makes it possible to ensure the function of the expansion vessel even in the presence of a defective vessel; for example with three expansion vessels 10, 10a and 10b of 60 liters capacity each, which are arranged in series, a total water accumulation capacity of 180 liters is obtained; if one expansion vessel of the three suffers a fall in pressure of the gas in the first chamber 15, the overall working capacity of the water accumulation means is reduced to 120 liters, but it is not eliminated, unlike what occurs with a conventional expansion vessel of 180 liters, which, in the absence of pressure in the first chamber, is eliminated substantially entirely.

Such possibility of mounting a plurality of expansion vessels 10 according to the invention in series makes it possible to provide, on a line of a plumbing system, water accumulation means of the desired capacity, with considerably reduced encumbrances and increased functionality with respect to the use of a traditional expansion vessel of the same capacity.

In practice it has been found that the invention fully achieves the intended aim and objects.

In particular, with the invention an expansion vessel has been devised which for the same capacity requires less space for installation than conventional expansion vessels.

Furthermore, with the invention an expansion vessel has been devised in which water does not stagnate.

Moreover, with the invention an expansion vessel has been devised which can be easily fitted to existing conventional plumbing systems.

Moreover, with the invention, an expansion vessel has been devised which is capable of reducing the starts and stops of a pump of the plumbing system on which it is installed.

Furthermore, with the invention, an expansion vessel has been devised in which the membrane has a longer lifetime than in an equivalent, conventional expansion vessel.

The invention, thus conceived, is susceptible of numerous modifications and variations, all of which are within the scope of the appended claims. Moreover, all the details may be substituted by other, technically equivalent elements.

In practice the components and the materials employed, and the contingent dimensions and shapes, may be any according to requirements and to the state of the art.

The disclosures in Italian Patent Application No. PD2014A000058 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An expansion vessel (10), particularly for plumbing systems with water pumping unit, of the type comprising:
- a hollow body (11), constituted by two half-shells (12, 13) which are closed hermetically on each other,
- a membrane (14), which is located inside said hollow body (11) and is adapted to define two chambers with variable volume (15, 16),
- a first chamber (15) between the hollow body (11) and the membrane (14), for a gas,
- a second chamber (16), inside said membrane (14),
said expansion vessel (10) being **characterized in that** it comprises a tubular element (17) that passes within said membrane (14) and is fixed between an inlet (18) and an outlet (19) which are defined on said hollow body (11), said tubular element (17) having radial holes (20) for the passage of water between said second chamber (16) and the inside of said tubular element (17).

2. The expansion vessel according to claim 1, **characterized in that** said radial holes (20) are arranged on a plurality of rows that are extended in the direction of the axis of the tubular element (17), so as to affect the tubular element (17) substantially along its entire length.

3. The expansion vessel according to one or more of the preceding claims, **characterized in that** the elastically deformable membrane (14) is made of synthetic rubber, for example EPDM, and is substantially tubular.

4. The expansion vessel according to one or more of the preceding claims, **characterized in that** said membrane (14) is provided with end flaps (22, 23) that are folded outwardly.

5. The expansion vessel according to one or more of the preceding claims, **characterized in that** each one of said end flaps (22, 23) is pinched between a collar (24, 25) that extends from a corresponding half-shell (12, 13) and a cover (26, 27), the perimetric rim of which is folded so as to lock the corresponding end flap (22, 23) against the collar (24, 25).

6. The expansion vessel according to one or more of claims 1 to 4, **characterized in that** said cover (126) has its perimetric rim fixed by way of screws (140) to an annular complementary flange (150) that is arranged so as to surround the collar (24) and is engaged with it by way of an extraction-preventing fold (151) of said collar (24), the end flap (22, 23) of the membrane (14) being locked between the corresponding extraction-preventing fold (151) of the collar (24) and the cover (126).

7. The expansion vessel according to one or more of the preceding claims, **characterized in that** said cover (26, 27) is provided with a water passage sleeve (28, 29), said water passage sleeves (28, 29) defining said inlet (18) and outlet (19) for the water.

8. The expansion vessel according to one or more of the preceding claims, **characterized in that** a respective centering element (30, 31) is interposed between each cover (26, 27) and the corresponding end of the tubular element (17).

9. The expansion vessel according to one or more of the preceding claims, **characterized in that** each one of said centering elements (30, 31) is provided with an outer annular portion (32) and a central centering portion (33).

10. The expansion vessel according to claim 9, **characterized in that** said outer annular portion (32) is extended with a perimetric flap (35) that is adapted to be locked between the corresponding end flap (22) of the membrane (14) and the respective cover (26), said central centering portion (33) being constituted by a collar (40) that is contoured to enter the water passage sleeve (28) and is provided with a compartment (39) in which the end of the tubular element (17) is inserted.
